# EUROPEAN PATENT SPECIFICATION

(11) **EP 3 789 245 B1**
(45) Date of publication and mention of the grant of the patent: **23.11.2022**
(21) Application number: 20190467.9
(22) Date of filing: 11.08.2020
(51) Int. Cl.: B60R 5/04, B60H 1/00, B60P 1/00

(54) **TOUR BUS**
REISEBUS
BUS TOURISTIQUE

(30) Priority: 03.09.2019 TW 108131627; 15.07.2020 TW 109123961
(43) Date of publication of application: 10.03.2021
(73) Proprietor: OK Biotech Co. Ltd., Hsinchu City 300 (TW)
(72) Inventor: LEE, An-Yuan, 300 Hsinchu City (TW); LAI, Chia-Te, 300 Hsinchu City (TW)
(74) Representative: Lermer, Christoph

(56) References cited:
- WO-A1-2014/131932
- CN-U- 204 915 329
- DE-U1- 20 308 871
- GB-A- 2 572 602

## Description

### TECHNICAL FIELD

The present disclosure relates in general to a tour bus.

### BACKGROUND

Featured in higher mobility and convenience, vehicles have been widely used in various fields in daily living and work areas. According to different destinations, people can select specific route for the vehicle to follow so as to help him/her to reach various work goals. Also, with social diversity, professional vehicles for specific purposes (such as blood donation cars, sprinklers, advertising cars and tour buses) have appeared to demonstrate various functions, such as merchandise exhibitions, merchandise retails, engineering operations and entertainments.

The tour bus, or called as the tourist shuttle or the sightseeing coach, is a mass transportation vehicle. In general, the tour bus is furnished with a luggage compartment located at a lateral side of the vehicle body for passengers to store temporarily their own luggage or suitcases. A typical luggage compartment usually has a compartment door and a receiving portion. The receiving portion is a space located inside the vehicle body. After a user opens the compartment door, then his/her suitcases can be orderly placed into the receiving portion. On the other hand, while in fetching the suitcases, the user needs to bow his/her body firstly, and then he/she can extend himself/herself into the receiving portion to fetch the required suitcases. It is obvious that the aforesaid fetching procedure may cause inconvenience to the user. However, if the compartment door suddenly shifts while the user bows his/herself to cross the compartment door, it would be quite possible that the user may be harmed or in jeopardy. In particular, the conventional compartment door is not convenient for senior civilians.

Besides the tour bus, some vehicles may be also equipped with a built-in accommodation room for the user to store specific objects. When the user needs to fetch any object inside the accommodation room, the foregoing situation would be met again to, also again, cause usage inconvenience.

WO 2014/131932 A1 describes a device , according to the preamble of claim 1, which is installed inside the luggage holder of a coach, in the lower portion of the vehicle, which is characterized in that said device includes, at least, one movable, strong platform which takes up approximately half the width of said luggage holder and is provided with mobility means which enable the movement thereof from one side of the luggage holder to the other in the transverse direction, which can thus be accessed via either of the side doors thereof.

DE 203 08 871 U1 relates to a load carrier, in particular a bicycle carrier, for mounting in the loading space of a vehicle, with a support device which can be displaced between a loading and an unloading position located outside the loading space and a transport position located inside the loading space.

Thus, an improved tour bus provided for resolving the aforesaid shortcomings is definitely urgent and welcome to the persons in the art.

### SUMMARY

An object of the present disclosure is to provide a tour bus that includes a movable placing portion in a storage area. The movable placing portion allows a user to fetch or store his/her own luggage in a manner with a reduced risk of hitting a luggage compartment door; particularly conveniently for senior users. In addition, a supportive structure is further introduced to reinforce the placing platform while being out of the vehicle body, and also to enhance mobility of the placing platform. To meet variety of vehicle bodies, the placing platform can be manufactured separately before being assembled to the vehicle body.

In this disclosure, the tour bus includes a vehicle body, a front door, a rear door, a plurality of wheels, a luggage compartment door and a movable placing portion. The vehicle body includes a storage area. The front door disposed at one lateral side of the vehicle body can communicate spatially inside of the vehicle body with the atmosphere. The rear door disposed at the same lateral side can also communicate spatially the inside of the vehicle body with the atmosphere. The plurality of wheels furnished individually beneath to the vehicle body are used for moving the vehicle body. The luggage compartment door disposed also at the same lateral side by corresponding to the storage area and being located between the front door and the rear door can also communicate spatially the storage area of the vehicle body with the atmosphere. The movable placing portion foldably collected in the storage area includes a driving device, a pivotal member, a transmission linkage, a placing platform and a supportive structure. The driving device is connected with the transmission linkage, and the transmission linkage is further connected with the placing platform. The pivotal member connects pivotally the placing platform and the supportive structure so as to allow the supportive structure to swing about the pivotal member with respect to the placing platform. The driving device drives the transmission linkage to further displace the placing platform in a moving direction in and out around the storage area of the vehicle body. When the placing platform is within the storage area, the supportive structure is collected in the storage area at a storage position with respect to the placing platform. When the placing platform is displaced in the moving direction to expose a portion thereof out of the vehicle body, the supportive structure is swung away from the storage position with respect to the placing platform, such that the supportive structure can reach a supporting position with respect to the placing platform, and so the supportive structure can be used to support the placing platform.

In one embodiment of this disclosure, the supportive structure is pivotally turned about the pivotal member to swing with respect to the placing platform between a top surface and a bottom surface of the placing platform.

In one embodiment of this disclosure, the storage position includes a first storage position and a second storage position, the first storage position is achieved by turning the supportive structure to adhere onto a bottom surface of the placing platform, and the second storage position is achieved by turning the supportive structure to be disposed vertically on a top surface of the placing platform.

In one embodiment of this disclosure, the movable placing portion includes a support-moving member furnished to the supportive structure, and the support-moving member is used for moving the supporting structure in the moving direction while the supportive structure is at the supporting position.

In one embodiment of this disclosure, the support-moving member is collected into the storage area according to the storage position of the supportive structure.

In one embodiment of this disclosure, the movable placing portion includes a plurality of platform-moving members, and each of the plurality of the platform-moving members is connected with the bottom surface of the placing platform.

In one embodiment of this disclosure, the vehicle body includes a seat area and a driver space, the seat area is located above the storage area, the driver space is connected spatially with one side of the seat area, and the front door is disposed by corresponding to the driver space.

As stated, by providing the tour bus of this disclosure, structures inside the luggage compartment door are improved so as to make at least a portion of the movable placing portion able to be moved out of the vehicle body, and thereupon the user needn't bow his/her body deep into the receiving portion to fetch or store his/her luggage. Thus, management of the luggage would not be a problem anymore, and possible injury to the user by the luggage compartment door can be reduced. In addition, this design of the tour bus in this disclosure is also convenient for senior civilians.

Further, in this disclosure, the placing platform of the movable placing portion can be individually structured out of the vehicle body, and then installed into the vehicle body for following usage.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG.1A is a schematic view of an embodiment of the tour bus in accordance with this disclosure;
FIG.1B is a schematic view showing an open state of the luggage compartment door of the tour bus in accordance with this disclosure;
FIG.2 is a schematic view showing that the movable placing portion of the tour bus of FIG.1A is shifted out of the vehicle body in accordance with this disclosure;
FIG.3A and FIG.3B demonstrate schematically an embodiment of the movable placing portion in accordance with this disclosure; and
FIG.4A and FIG.4B demonstrate schematically another embodiment of the movable placing portion of the tour bus of FIG.1A in accordance with this disclosure.
FIG.5 is a schematic view of another embodiment of the tour bus in accordance with this disclosure;
FIG.6 is a schematic view showing that the movable placing portion of the tour bus of FIG.5 is shifted out of the vehicle body in accordance with this disclosure;
FIG.7 and FIG.8 demonstrate schematically another embodiment of the movable placing portion of the tour bus of FIG.5 in accordance with this disclosure; and
FIG.9 and FIG.10 demonstrate schematically a further embodiment of the movable placing portion of the tour bus of FIG.5 in accordance with this disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

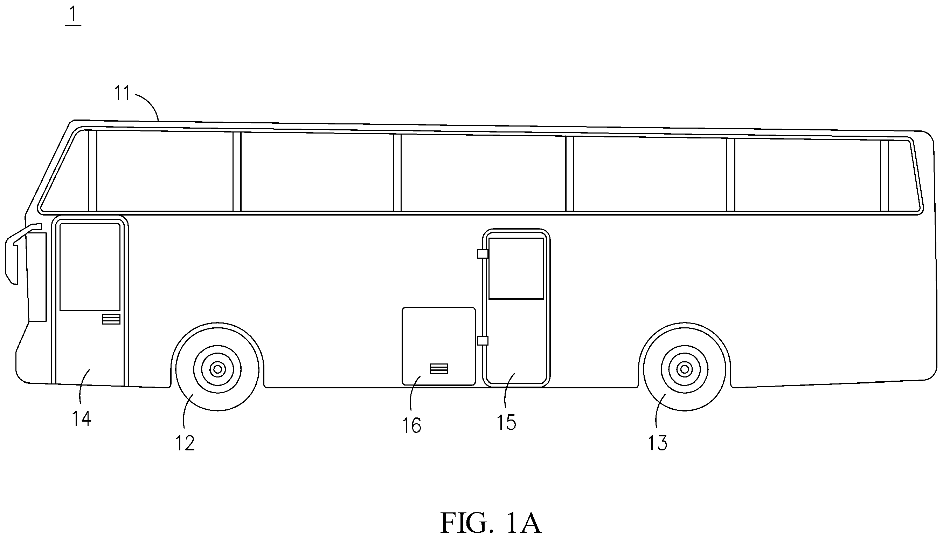

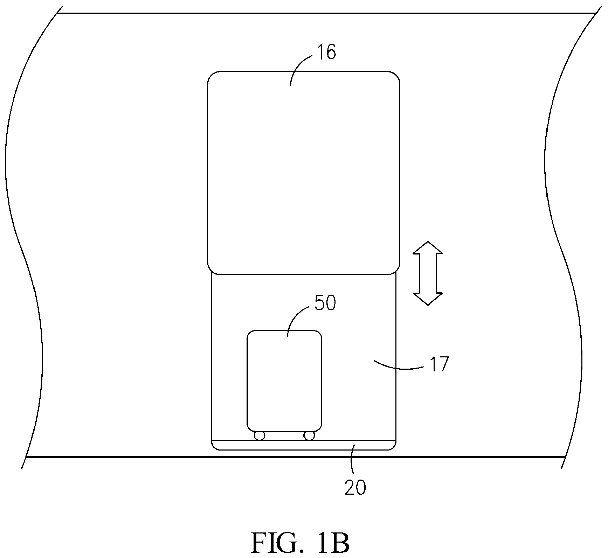

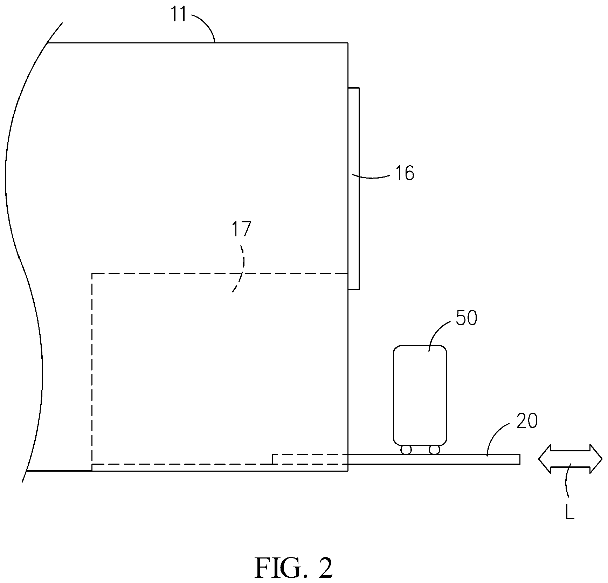

FIG.1A is a schematic view of an embodiment of the tour bus in accordance with this disclosure, FIG.1B is a schematic view showing an open state of the luggage compartment door of the tour bus in accordance with this disclosure, and FIG.2 is a schematic view showing that the movable placing portion of the tour bus of FIG.1A is shifted out of the vehicle body in accordance with this disclosure. In this embodiment, the tour bus 1 includes a vehicle body 11, a plurality of wheels 12, 13, a front door 14, a rear door 15 and a luggage compartment door 16. The wheels 12, 13, connected to a bottom of the vehicle body 11, are used for displacing the vehicle body 11. As shown in FIG.1A, the wheel 12 is a front wheel, and the wheel 13 is a rear wheel.

In this embodiment, the front door 14 is disposed at one lateral side of the vehicle body 11, and the rear door 15 is also disposed at the lateral side thereof. With the front door 14 or the rear door 15, a passenger can enter or leave the vehicle body 11. Inside the vehicle body 11, passenger seats, a guide seat, air-conditioning outlets, TVs, a toilet, a wireless network and charging ports are at least included. Practically, exact numbers and types of equipment or devices inside the vehicle body 11 are up to realistic requirements. The luggage compartment door 16, disposed at the lateral side of the vehicle body 11, is located between the front door 14 and the rear door 15. Behind the luggage compartment door 16, a receiving portion 17 and a movable placing portion 20 are included inside the vehicle body 11. In particular, the receiving portion 17 is a room formed inside the vehicle body 11. When the luggage compartment door 16 is opened (as shown in FIG.2), the receiving portion 17 behind the luggage compartment door 16 would be exposed to the user. In addition, the movable placing portion 20 is movably disposed at the bottom of the receiving portion 17, so that the movable placing portion 20 can displace out of the vehicle body 11 from the receiving portion 17 in a moving direction L. Thereupon, by arranging the luggage 50 to be rested on the movable placing portion 20, the luggage 50 can be displaced out of the luggage compartment door 16 without bowing user's body deep into the receiving portion 17 while in fetching the luggage 50.

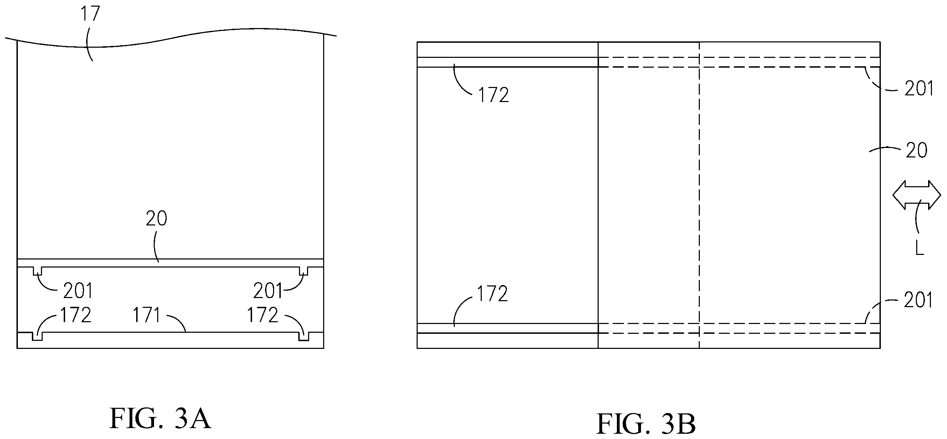

According to this disclosure, embodying of the movable placing portion 20 is not limited to the aforesaid embodiment. For example, as shown in FIG.3A and FIG.3B, another embodiment of the movable placing portion of the tour bus of FIG.1A in accordance with this disclosure is schematically demonstrated. In this embodiment, a bottom 171 of the receiving portion 17 is furnished with at least one first moving member 172, and the movable placing portion 20 is furnished with at least one second moving member 201, in which the first moving member 172 is disposed in correspondence with the second moving member 201. Thereupon, by providing relative motion between the first moving member 172 and the second moving member 201, the movable placing portion 20 can be displaced. Thus, according to this embodiment, by having the second moving member 201 to move along the first moving member 172, the movable placing portion 20 can be displaced in a moving direction L on the bottom 171 of the receiving portion 17. In this embodiment, the first moving member 172 and the second moving member 21 are embodied respectively as a sliding slot and a slider to pair the sliding slot. Namely, with the slider to slide along the sliding slot, the movable placing portion 20 can displace in the moving direction L with respect to the bottom 171 of the receiving portion 17. By having FIG.3A and FIG.3B as an example, the first moving member 172 is a sliding slot, while the second moving member 201 is a slider. Thus, while the user pulls the movable placing portion 20 outward by displacing the slider 201 along the sliding slot 172, then a portion of the movable placing portion 20 can be moved out of the vehicle body 11 from the receiving portion 17. In an embodiment not shown herein, the first moving member is a slider, and the second moving member is a sliding slot. In other words, a bottom of the movable placing portion 20 is furnished with the sliding slot, and the bottom 171 of the receiving portion 17 is furnished the corresponding slider. Then, through the sliding slot to displace with respect to the slider, the user can pull the movable placing portion 20 to move in the aforesaid moving direction L.

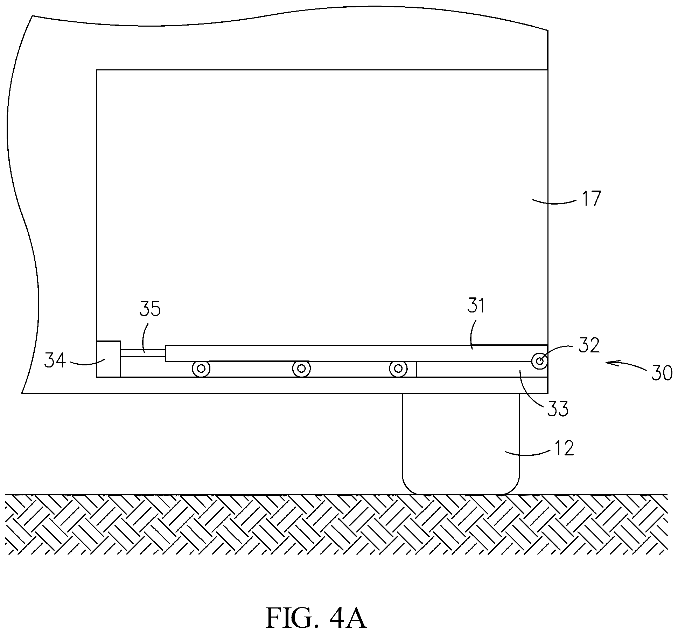

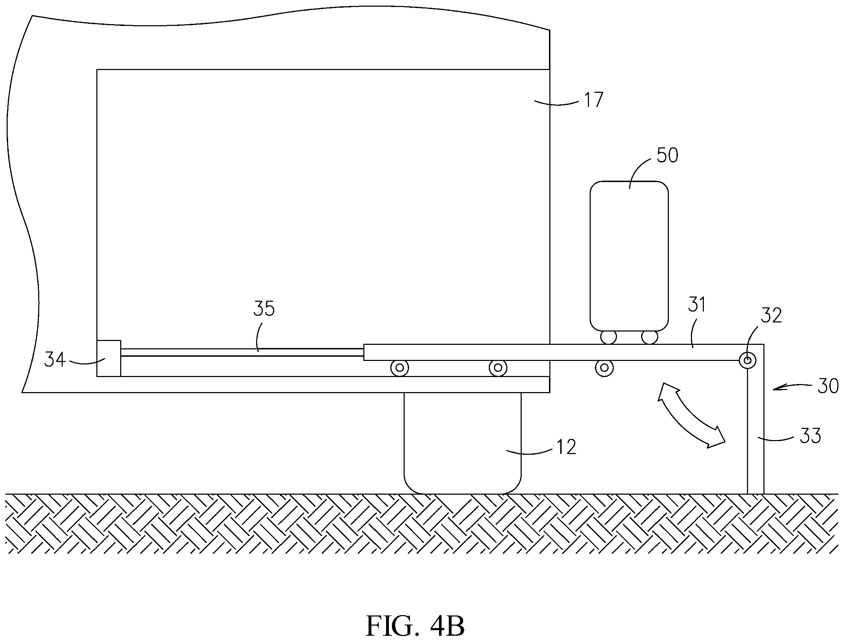

According to FIG.4A and FIG.4B, a further embodiment of the movable placing portion of the tour bus of FIG.1A in accordance with this disclosure is demonstrated. It shall be explained that, for concise illustration, the aforesaid luggage compartment door 16 are omitted in FIG.4A and FIG.4B. The movable placing portion 30 includes a placing platform 31, a pivotal member 32, a supportive structure 33, a driving device 34 and a transmission linkage 35. The placing platform 31 is disposed inside the receiving portion 17, and the placing platform 31 is pivotally connected with the supportive structure 33 via the pivotal member 32. Namely, with the pivotal member 32, the supportive structure 33 and the placing platform 31 are pivotally connected. As shown in FIG.4A, the supportive structure 33 can be pivotally rotated to adhere the bottom of the placing platform 31. In addition, the bottom of the placing platform 31 can be furnished with a plurality of rollers for helping the placing platform 31 to displace. The transmission linkage 35 is connected between the placing platform 31 and the driving device 34. Thereupon, the driving device 34 can drive the transmission linkage 35 to displace the placing platform 31 inside the receiving portion 17 outward so as to have a portion of the placing platform 31 out of the vehicle body 11. In this embodiment, the driving device 34 can be a driving motor, the transmission linkage 35 can be a telescopic link for displacing the placing platform 31.

As shown in FIG.4B, while a portion of the placing platform 31 is displaced out of the vehicle body 11 so as to allow the supportive structure 33 to be completely out of the vehicle body 11, then the supportive structure 33 can be pivotally rotated, via the pivotal member 32, about the placing platform 31 to a position standing the supportive structure 33 on the ground. By having the supportive structure 33 to support the placing platform 31, weight of the luggage 50 can be safely sustained by the placing platform 31. In this embodiment, the placing platform 31 of the movable placing portion 30 can be individually structured out of the vehicle body 11, and the placing platform 31 of the movable placing portion 30 is then fixed into the vehicle body 11.

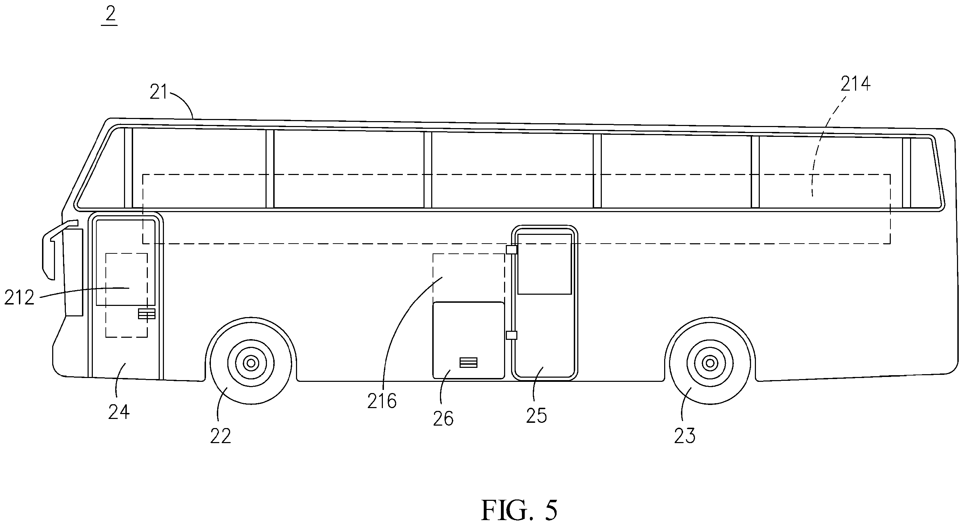

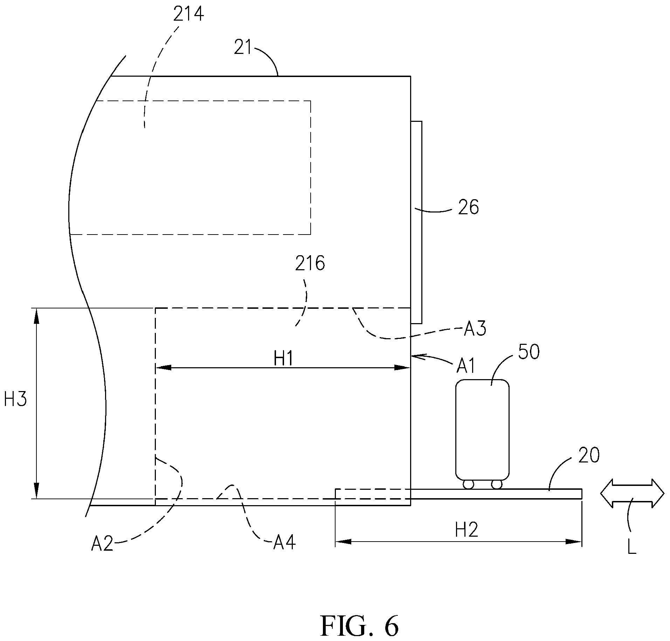

FIG.5 is a schematic view of another embodiment of the tour bus in accordance with this disclosure, and FIG.6 is a schematic view showing that the movable placing portion of the tour bus of FIG.5 is shifted out of the vehicle body. As shown, the tour bus 2 includes a vehicle body 21, a plurality of wheels 22, 23, a front door 24, a rear door 25, a luggage compartment door 26 and a movable placing portion 20. The wheels 22, 23, connected to a bottom of the vehicle body 21, are used for displacing the vehicle body 21. In this embodiment, the wheel 22 is a front wheel, and the wheel 23 is a rear wheel.

In this embodiment, the front door 24 is disposed at one lateral side of the vehicle body 21, and the rear door 25 is also disposed at the lateral side thereof. With the front door 24 or the rear door 25, a passenger can enter or leave the vehicle body 21. The vehicle body 21 includes a driver space 212, a seat area 214 and a storage area 216; in which the the seat area 214 is located above the storage area 216. and the driver space 212 is connected spatially to one side of the seat area 214. The front door 24 is disposed close to the driver space 212. Both the front door 24 and the rear door 25 can communicate spatially the interior of the vehicle body 21 with the exterior thereof. Passengers can reach the seat area 214 inside the vehicle body 21 via the front door 24 or the rear door 25. In the seat area 214, passenger seats, air-conditioning outlets, TVs, a toilet, a wireless network and charging ports can be furnished. Practically, exact numbers and types of equipment or devices inside the vehicle body 21 are determined according to different requirements upon the tour bus 2.

In this embodiment, the luggage compartment door 26, disposed at the lateral side of the vehicle body 21, is located between the front door 24 and the rear door 25. The storage area 216 is an accommodation space formed inside the vehicle body 21. The location of the luggage compartment door 26 is respective to the storage area 216, and the luggage compartment door 26 is used for reaching spatially the storage area 216 inside the vehicle body 21. When the luggage compartment door 26 is opened (as shown in FIG.6), the storage area 216 can be exposed to the user. The dimensions of the storage area 216 can be determined according to the size of the vehicle body 21. In this embodiment, the storage area 216 is an accommodation space defined by multiple walls, including lateral walls, an upper wall A3 and a lower wall A4. An opening A1 for exposing the storage area 216 is defined by edges of the lateral walls, the upper wall A3 and the lower wall A4. As shown, an inner wall A2 is defined as the rearmost lateral wall of the storage area 216. A length distance H1 is a distance of the storage area 216 in a longitudinal direction between the opening A1 and the inner wall A2, in which the longitudinal direction is parallel to the moving direction L. A height distance H3 is a distance of the storage area 216 in a vertical direction between the upper wall A3 and the lower wall A4.

In this embodiment, another length distance H2 is defined as a distance of the movable placing portion 20 in the longitudinal direction. The length distance H1 of the storage area 216 is greater than the length distance H2 of the movable placing portion 20, such that the movable placing portion 20 can be foldably disposed into the storage area 216 and moved in the moving direction L out of the storage area 216 of the vehicle body 21. When the movable placing portion 20 is moved in the moving direction L out of the vehicle body 21 from the storage area 216, the luggage 50 can be easily placed on the movable placing portion 20 or removed from the movable placing portion 20. Thus, to fetch or place the luggage 50, the user needn't anymore to bend his/her body into the storage area 216, and also the luggage compartment door 26 would be prevented from accidentally hitting the user.

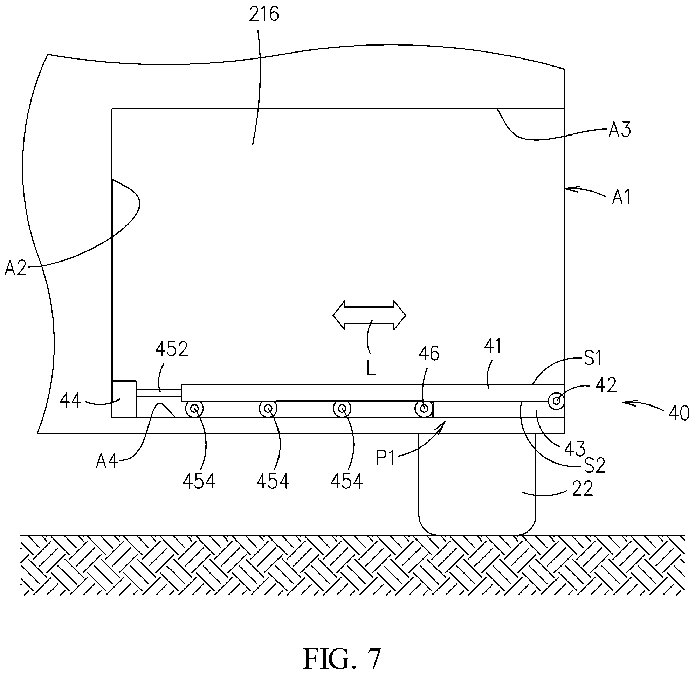

In one embodiment, the movable placing portion 20 can be directly constructed into the storage area 216. However, in another embodiment, according to the specific type of the vehicle body 21, the movable placing portion 20 for the storage area 216 can be relevantly assembled outsides before being mounted into the storage area 216. It shall be explained that the movable placing portion 20 of this embodiment is not limited to a specific type. Practically, the movable placing portion 20 can be organized according to the kinematic relationship between the first moving member 172 and the second moving member 201 shown in FIG.3A and FIG.3B for displacing the movable placing portion 20, or according to the design shown in FIG.4A and FIG.4B where the supportive structure 33 is introduced to reinforce the support of the placing platform 31 outside the vehicle body and further to enhance mobility of the placing platform 31. Importantly, this disclosure is not limited to the aforesaid description. Further, in FIG.7 to FIG.10, other embodiments for the movable placing portion in accordance with this disclosure are provided.

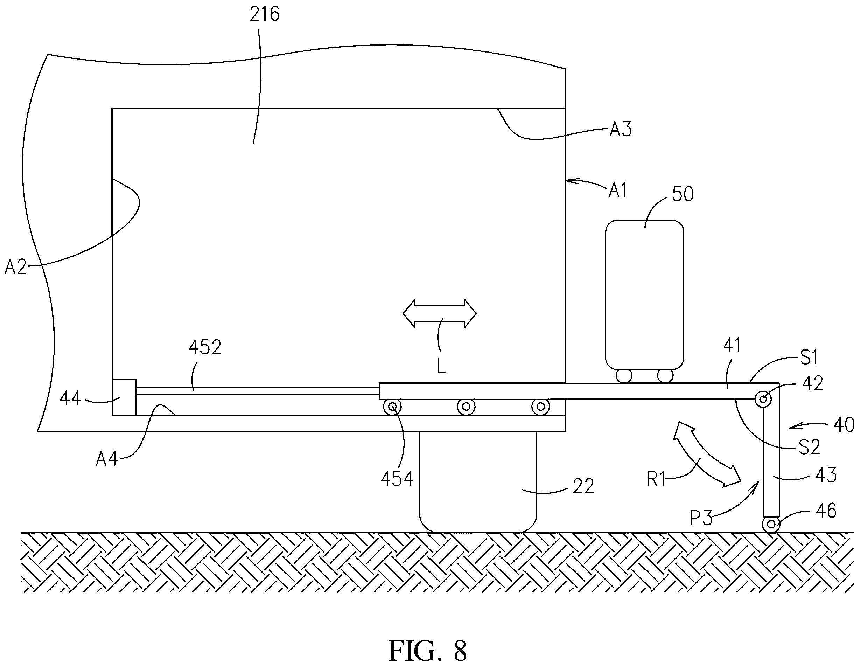

Referring now to FIG.7 and FIG.8, another embodiment of the movable placing portion is schematically shown. For concise explanation, the luggage compartment door 26 is omitted in both FIG.7 and FIG.8. In addition, the storage area 216 of FIG.7 and FIG.8 is similar to that of FIG.6, thus the same components would be assigned with the same part numbers, and details thereabout would be omitted herein. As shown, the movable placing portion 40 can be disposed in the storage area 216 in a foldable manner. The movable placing portion 40 includes a placing platform 41, a pivotal member 42, a supportive structure 43, a driving device 44 and a transmission linkage 452. The placing platform 41 is disposed in the storage area 216, the pivotal member 42 connecting the placing platform 41 and the supportive structure 43 is to allow the supportive structure 43 to pivotally turn about the placing platform 41.

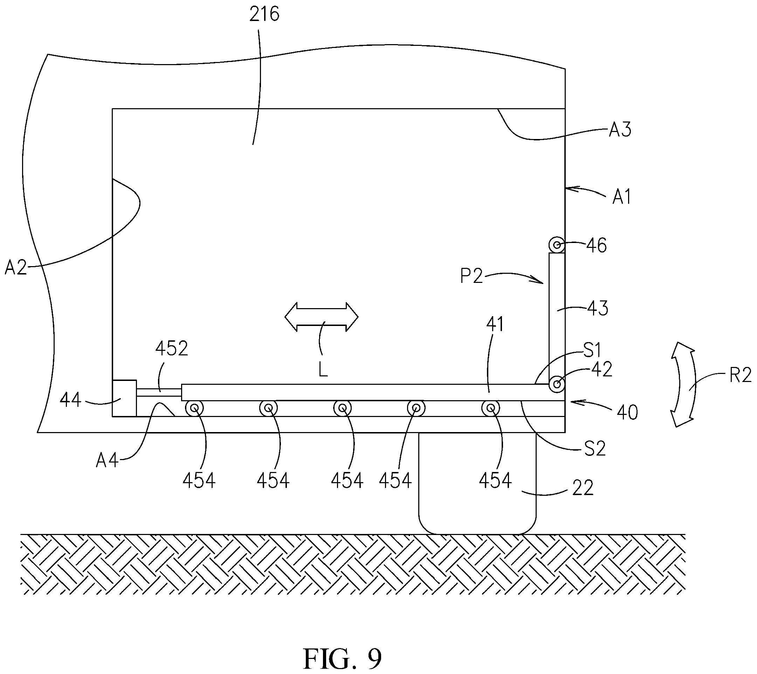

As shown in FIG.7, the placing platform 41 is positioned in the storage area 216, and the supportive structure 43 is pivotally turned to a storage position under the placing platform 41 inside the storage area 216. In this state, both the supportive structure 43 and the placing platform 41 are collected in the storage area 216. In one embodiment, the supportive structure 43 is pivotally turned around the pivotal member 42 within a rotation stroke R1 for the supportive structure 43 to follow. Thereupon, the supportive structure 43 can be pivotally turned from a first storage position P1 of FIG.7 to a supporting position P3 of FIG.8. Namely, the supportive structure 43 is defined with a 90-degree rotation stroke R1. Practically, the storage position of the supportive structure 43 can be the first storage position P1 of FIG.7, or the second storage position P2 of FIG.9. The first storage position P1 of FIG.7 can be achieved by swinging the supportive structure 43 to adhere a bottom surface S2 of the placing platform 41, and the second storage position P2 of FIG.9 can be achieved by swinging the supportive structure 43 vertically to adhere a top surface S1 of the placing platform 41, such that the supportive structure 43 can be collected at the first storage position P1 of FIG.7 or the second storage position P2 of FIG.9. Thereupon, the entire collect flexibility can be increased.

In this embodiment, the driving device 44 drives the transmission linkage 452 so as to displace the placing platform 41 in the moving direction L in and out of the storage area 216 of the vehicle body 21. In FIG.7, the placing platform 41 is located within the storage area 216. In this embodiment, the driving device 44 can be a drive motor, the transmission linkage 452 can be a telescopic connection rod to displace the placing platform 41. When the placing platform 41 is moved in the moving direction L from a position in the storage area 216 as shown in FIG.7 to another position out of the vehicle body 21 as shown in FIG.8, while in displacing the placing platform 41, the supportive structure 43 would be turned according to a rotation stroke R1 with respect to the placing platform 41. Namely, the supportive structure 43 is pivotally rotated about the pivotal member 42 by a 90-degree angle, such that the supportive structure 43 can stand on the floor outside the vehicle body 21 from the original position adhering the bottom surface S2 of the placing platform 41. In other words, by having the supportive structure 43 to swing with respect to the placing platform 41, the supportive structure 43 can be moved away from the first storage position P1 of the storage position so as to reach the supporting position P3 of the supportive structure 43 with respect to the placing platform 41. The luggage 50 is to be placed on the top surface S1 of the placing platform 41, and to be supported by having the supportive structure 43 to contact at the bottom surface S2 of the placing platform 41, such that the weight of the luggage 50 can be safely sustained on the placing platform 41. On the other hand, in collecting the movable placing portion 40, the supportive structure 43 shall be moved away from the supporting position P3. In this embodiment, the supportive structure 43 is pivotally rotated about the pivotal member 42, and the supportive structure 43 would be swung toward the bottom surface S2 of the placing platform 41 with respect to the placing platform 41 in a 90-degree angle. Thereupon, the supportive structure 43 can be finally attached to the bottom surface S2 of the placing platform 41, and then the placing platform 41 would be further displaced in the moving direction L into the storage area 216; i.e., from the state of FIG.8 to that of FIG.7.

In a further embodiment, the aforesaid manipulation can be performed by a movable placing portion 40 including a plurality of platform-moving members 454. These platform-moving members 454 are individually connected to the bottom surface S2 of the placing platform 41, and touch the lower wall A4 of the storage area 216. When the placing platform 41 is displaced in the moving direction L back and forth in the storage area 216 or out of the vehicle body 21, the platform-moving members 454 would be moved with the placing platform 41 so as thereby to displace the placing platform 41 over the lower wall A4 of the storage area 216. In this embodiment, the platform-moving member 454 can be a roller.

In one more embodiment, the movable placing portion 40 includes a support-moving member 46 connected to an end of the supportive structure 43. Referring to FIG.8, while at the supporting position P3, the supportive structure 43 can be moved in the moving direction L via the support-moving member 46, such that the position of the placing platform 41 outside the vehicle body 21 can be adjusted. For example, the support-moving member 46 can be moved so as to displace the placing platform 41 toward the storage area 216. On the other hand, when the placing platform 41 is moved to be collected into the storage area 216 as shown in FIG.7, according to the first storage position P1 of the supportive structure 43, the support-moving member 46 and the supportive structure 43 would be collected together into the storage area 216. Namely, at this time, the support-moving member 46 is also adhered to the bottom surface S2 of the placing platform 41.

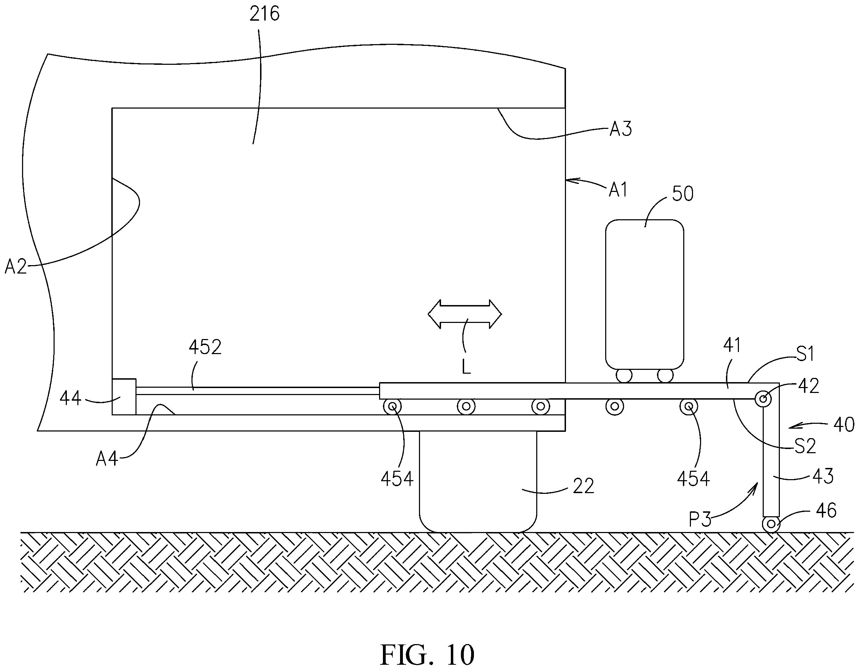

Referring to FIG.9 and FIG. 10, one further embodiment of the movable placing portion in accordance with this disclosure is schematically shown. It shall be explained that, for concise description, since the storage area 216 in FIG.9 and FIG. 10 is similar to that in FIG.6, the same elements would be assigned by the same part numbers to tell the same functions, and thus details thereabout would be omitted herein. In addition, the luggage compartment door 26 is omitted in FIG.9 and FIG. 10, and also the movable placing portion 40 in FIG.9 and FIG. 10 is similar to that in FIG.7 and FIG.8. Thus, the same elements would be assigned by the same part numbers to tell the same functions, and so details thereabout would be omitted herein. In the following description, only the difference in between would be elucidated. As shown in FIG.9, the placing platform 41 of the movable placing portion 40 is located in the storage area 216, and the supportive structure 43 thereof is turned to reach the second storage position P2 with respect to the placing platform 41, such that both supportive structure 43 and the placing platform 41 are collected in the storage area 216. As shown in FIG. 10, the supportive structure 43 is turned to reach the supporting position P3, where the supportive structure 43 is perpendicular to the top surface S1 of the placing platform 41 and stands on the floor.

In this embodiment, the driving device 44 drives the transmission linkage 452 to further displace the placing platform 41 in the moving direction L, such that the placing platform 41 can move in and out of the storage area 216 of the vehicle body 21. In the state of FIG.9, the placing platform 41 is located in the storage area 216. When the placing platform 41 is displaced in the moving direction L from the position inside the storage area 216 as shown in FIG.9 to another position with part of the placing platform 41 to protrude out of the storage area 216 (also, out of the vehicle body 21) as shown in FIG. 10, the supportive structure 43 would be turned 180° about the pivotal member 42, simultaneously with the placing platform 41, according to the rotation stroke R2 to stand vertically on the floor (the supporting position P3) from the second storage position P2. As described above, the supportive structure 43 is moved away from the second storage position P2 to the supporting position P3, with respect to the placing platform 41. At the supporting position P3, the supportive structure 43 supports at the bottom surface S2 of the placing platform 41, such that the weight of the luggage 50 won't crash the placing platform 41. On the other hand, in collecting the movable placing portion 40, the supportive structure 43 shall be moved away from the supporting position P3, then the supportive structure 43 is turned by pivoting about the pivotal member 42 to obtain a 180-degree rotational angle with respect to the placing platform 41, such that the supportive structure 43 can be moved vertically and fixed above the top surface S1 of the placing platform 41. In some other embodiments, the supportive structure 43 can be further adhered to the top surface S1 of the placing platform 41. Finally, the placing platform 41 is then moved in the moving direction L to enter the storage area 216 as a state shown in FIG.9.

In the aforesaid manipulation upon the movable placing portion 40, the platform-moving members 454 can facilitate the moving of the placing platform 41.

In one more further embodiment, the movable placing portion 40 can include a support-moving member 46 furnished to the free end of the supportive structure 43. When the supportive structure 43 is at the supporting position P3 as shown in FIG. 10, the support-moving member 46 can be used for displacing the supportive structure 43 in the moving direction L, such that the placing platform 41 can be conveniently moved while being protruded out of the vehicle body 21. On the o the hand, when the placing platform 41 is moved to be collected into the storage area 216 as shown in FIG.9, then the supportive structure 43 as well as the support-moving member 46 can be collected in the storage area 216 at the second storage position P2 as shown in FIG.9.

In summary, by providing the tour bus of this disclosure, structures inside the luggage compartment door are improved so as to make at least a portion of the movable placing portion able to be moved out of the vehicle body, and thereupon the user needn't bow his/her body deep into the receiving portion to fetch or store his/her luggage. Thus, management of the luggage would not be a problem anymore, and possible injury to the user by the luggage compartment door can be reduced. In addition, this design of the tour bus in this disclosure is also convenient for senior civilians.

Further, in this disclosure, the placing platform of the movable placing portion can be individually structured out of the vehicle body, and then installed into the vehicle body for following usage.

With respect to the above description then, it is to be realized that the optimum dimensional relationships for the parts of the disclosure, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present disclosure.

## Claims

1. A tour bus (2), comprising:
a vehicle body (21), including a storage area (216);
a front door (24), disposed at a lateral side of the vehicle body (21), being to communicate spatially an inside of the vehicle body (21) with the atmosphere;
a rear door (25), disposed at the lateral side of the vehicle body (21), being to communicate spatially the inside of the vehicle body (21) with the atmosphere;
a plurality of wheels (22, 23), furnished under the vehicle body (21) for moving the vehicle body (21);
a luggage compartment door (26), dispose at the lateral side of the vehicle body (21) at a place respective to the storage area (216), located between the front door (24) and the rear door (25), being to communicate spatially the storage area (216) with the atmosphere, **characterized in that**
a movable placing portion (40), foldably disposed in the storage area (216), including a driving device (44), a pivotal member (42), a transmission linkage (452), a placing platform (41) and a supportive structure (43), the driving device (44) being connected with the transmission linkage (452), the transmission linkage (452) being further connected with the placing platform (41), the pivotal member (42) being connected between the placing platform (41) and the supportive structure (43) for pivotally connecting the supportive structure (43) and the placing platform (41), the driving device (44) being to drive the transmission linkage (452) to further displace the placing platform (41) in a moving direction (L) back and forth in the storage area (216) and the atmosphere out of the vehicle body (21);
wherein, when the placing platform (41) is located in the storage area (216), the supportive structure (43) is collected at a storage position (P1 or P2) with respect to the placing platform (41) within the storage area (216);
wherein, when a portion of the placing platform (41) in the storage area (216) is displaced to protrude out of the vehicle body (21) in the moving direction (L), the supportive structure (43) is turned away from the storage position with respect to the placing platform (41), and a supporting position (P3) is reached by the supportive structure (43) with respect to the placing platform (41), such that the placing platform (41) is supported by the supportive structure (43)
wherein the movable placing portion (40) includes a plurality of platform-moving members (454), which can be a roller and each of the plurality of the platform-moving members (454) is connected with a bottom surface (S2) of the placing platform (41), when the placing platform (41) is displaced in the moving direction (L) back and forth in the storage area (216) or out of the vehicle body (21), the platform-moving members (454) would be moved with the placing platform (41) so as thereby to displace the placing platform (41) over a lower wall (A4) of the storage area (216),
wherein the storage position (P1 or P2) includes a first storage position (P1) and a second storage position (P2), the first storage position (P1) is achieved by turning the supportive structure (43) to adhere onto a bottom surface (S2) of the placing platform (41), and the second storage position (P2) is achieved by turning the supportive structure (43) to be disposed vertically on a top surface (S1) of the placing platform (41),
wherein the movable placing portion (40) includes a support-moving member (46) furnished to the supportive structure (43), and the support-moving member (46) is used for moving the supporting structure (43) in the moving direction (L) while the supportive structure (43) is at the supporting position (P3).

2. The tour bus (2) of claim 1, wherein the supportive structure (43) is pivotally turned about the pivotal member (42) to swing with respect to the placing platform (41) between a top surface (S1) and a bottom surface (S2) of the placing platform (41).

3. The tour bus (2) of claim 1, wherein the support-moving member (46) is collected into the storage area (216) according to the storage position (P1 or P2) of the supportive structure (43).

4. The tour bus (2) of claim 1, wherein the movable placing portion (40) includes a plurality of platform-moving members (46), and each of the plurality of the platform-moving members (46) is connected with the bottom surface (S2) of the placing platform (41).

5. The tour bus (2) of claim 1, wherein the vehicle body (21) includes a seat area (214) and a driver space (212), the seat area (214) is located above the storage area (216), the driver space (212) is connected spatially with one side of the seat area (214), and the front door (24) is disposed by corresponding to the driver space (212).

## Patentansprüche

1. Reisebus (2), umfassend:
eine Fahrzeugkarosserie (21), die einen Stauraum (216) umfasst;
eine Vordertür (24), die an einer seitlichen Seite der Fahrzeugkarosserie (21) angeordnet ist, um das Innere der Fahrzeugkarosserie (21) räumlich mit der Atmosphäre zu verbinden;
eine Hintertür (25), die an der seitlichen Seite der Fahrzeugkarosserie (21) angeordnet ist, um das Innere der Fahrzeugkarosserie (21) räumlich mit der Atmosphäre zu verbinden;
eine Vielzahl von Rädern (22, 23), die unter der Fahrzeugkarosserie (21) angebracht sind, um die Fahrzeugkarosserie (21) zu bewegen;
eine Gepäckraumtür (26), die an der seitlichen Seite der Fahrzeugkarosserie (21) an einer dem Stauraum (216) entsprechenden Stelle zwischen der Vordertür (24) und der Hintertür (25) angeordnet ist, um den Stauraum (216) räumlich mit der Atmosphäre zu verbinden, **dadurch gekennzeichnet, dass**
ein beweglicher Anordnungsabschnitt (40), der klappbar in dem Stauraum (216) angeordnet ist, eine Antriebsvorrichtung (44), ein Schwenkelement (42), ein Übertragungsgestänge (452), eine Anordnungsplattform (41) und eine Stützstruktur (43) umfasst, wobei die Antriebsvorrichtung (44) mit dem Übertragungsgestänge (452) verbunden ist, und das Übertragungsgestänge (452) ferner mit der Anordnungsplattform (41) verbunden ist, das Schwenkelement (42) zwischen der Anordnungsplattform (41) und der Stützstruktur (43) verbunden ist, um die Stützstruktur (43) und die Anordnungsplattform (41) schwenkbar zu verbinden, wobei die Antriebsvorrichtung (44) dazu dient,
das Übertragungsgestänge (452) anzutreiben, um die Anordnungsplattform (41) in einer Bewegungsrichtung (L) hin und her in dem Stauraum (216) und der Atmosphäre aus der Fahrzeugkarosserie (21) zu verschieben;
wobei, wenn sich die Anordnungsplattform (41) in dem Stauraum (216) befindet, die Stützstruktur (43) in einer Lagerungsposition (P1 oder P2) in Bezug auf die Anordnungsplattform (41) innerhalb des Stauraums (216) gesammelt wird;
wobei, wenn ein Abschnitt der Anordnungsplattform (41) in dem Stauraum (216) so verschoben wird, dass er aus der Fahrzeugkarosserie (21) in der Bewegungsrichtung (L) herausragt, die Stützstruktur (43) von der Lagerposition in Bezug auf die Anordnungsplattform (41) weggedreht wird, und eine Stützposition (P3) durch die Stützstruktur (43) in Bezug auf die Anordnungsplattform (41) erreicht wird, so dass die Anordnungsplattform (41) durch die Stützstruktur (43) gestützt wird,
wobei der bewegliche Anordnungsabschnitt (40) eine Vielzahl von Plattform-Bewegungselementen (454) umfasst, die eine Rolle sein können, und jedes der Vielzahl der Plattform-Bewegungselemente (454) mit einer unteren Fläche (S2) der Anordnungsplattform (41) verbunden ist, wenn die Anordnungsplattform (41) in der Bewegungsrichtung (L) in dem Stauraum (216) oder aus der Fahrzeugkarosserie (21) hin und her verschoben wird, die Plattform-Bewegungselemente (454) mit der Anordnungsplattform (41) bewegt werden, um dadurch die Anordnungsplattform (41) über eine untere Wand (A4) des Stauraums (216) zu verschieben,
wobei die Lagerungsposition (P1 oder P2) eine erste Lagerungsposition (P1) und eine zweite Lagerungsposition (P2) umfasst, wobei die erste Lagerungsposition (P1) durch Drehen der Stützstruktur (43) erreicht wird, so dass sie an einer unteren Fläche (S2) der Anordnungsplattform (41) haftet, und die zweite Lagerungsposition (P2) durch Drehen der Stützstruktur (43) erreicht wird, so dass sie vertikal an einer oberen Fläche (S1) der Anordnungsplattform (41) angeordnet ist,
wobei der bewegliche Anordnungsabschnitt (40) ein Stützbewegungselement (46) umfasst, das an der Stützstruktur (43) angebracht ist, und das Stützbewegungselement (46) zum Bewegen der Stützstruktur (43) in der Bewegungsrichtung (L) verwendet wird, während sich die Stützstruktur (43) in der Stützposition (P3) befindet.

2. Reisebus (2) nach Anspruch 1, wobei die Stützstruktur (43) schwenkbar um das Schwenkelement (42) gedreht wird, um in Bezug auf die Anordnungsplattform (41) zwischen einer oberen Fläche (S1) und einer unteren Fläche (S2) der Anordnungsplattform (41) zu schwenken.

3. Reisebus (2) nach Anspruch 1, wobei das Stützbewegungselement (46) in den Stauraum (216) entsprechend der Lagerungsposition (P1 oder P2) der Stützstruktur (43) aufgenommen wird.

4. Reisebus (2) nach Anspruch 1, wobei der bewegliche Anordnungsabschnitt (40) eine Vielzahl von Stützbewegungselementen (46) umfasst, und jedes der Vielzahl der Stützbewegungselemente (46) mit der unteren Fläche (S2) der Anordnungsplattform (41) verbunden ist.

5. Reisebus (2) nach Anspruch 1, wobei die Fahrzeugkarosserie (21) einen Sitzbereich (214) und einen Fahrerraum (212) umfasst, der Sitzbereich (214) oberhalb des Stauraums (216) angeordnet ist, der Fahrerraum (212) räumlich mit einer Seite des Sitzbereichs (214) verbunden ist, und die Vordertür (24) entsprechend dem Fahrerraum (212) angeordnet ist.

## Revendications

1. Bus touristique (2), comprenant :
une carrosserie de véhicule (21), comprenant une zone de stockage (216) ;
une porte avant (24), disposée sur un côté latéral de la carrosserie du véhicule (21), destinée à faire communiquer un espace l'intérieur de la carrosserie du véhicule (21) avec l'atmosphère ;
une porte arrière (25), disposée sur le côté latéral de la carrosserie du véhicule (21), destinée à faire communiquer spatialement l'espace intérieur de la carrosserie du véhicule (21) avec l'atmosphère ;
une pluralité de roues (22, 23), disposées sous la carrosserie du véhicule (21) pour déplacer la carrosserie du véhicule (21) ;
une porte de coffre à bagages (26), disposée sur le côté latéral de la carrosserie du véhicule (21) à un endroit respectif de la zone de stockage (216), située entre la porte avant (24) et la porte arrière (25), étant destinée à faire communiquer spatialement la zone de stockage (216) avec l'atmosphère, **caractérisé en ce que**
une partie de placement mobile (40), disposée de manière pliable dans la zone de stockage (216), comprenant un dispositif d'entraînement (44), un élément pivotant (42), une tringlerie de transmission (452), une plate-forme de placement (41) et une structure de soutien (43), le dispositif d'entraînement (44) étant raccordé à la tringlerie de transmission (452), la tringlerie de transmission (452) étant en outre raccordée à la plate-forme de placement (41), l'élément pivotant (42) étant raccordé entre la plate-forme de placement (41) et la structure de soutien (43) pour raccorder de manière pivotante la structure de soutien (43) et la plate-forme de placement (41), le dispositif d'entraînement (44) étant destiné à entraîner la tringlerie de transmission (452) pour déplacer davantage la plate-forme de placement (41) dans une direction de déplacement (L) aller et retour dans la zone de stockage (216) et l'atmosphère hors de la carrosserie du véhicule (21) ;
dans lequel, lorsque la plate-forme de placement (41) est située dans la zone de stockage (216), la structure de soutien (43) est collectée à une position de stockage (P1 ou P2) par rapport à la plate-forme de placement (41) à l'intérieur de la zone de stockage (216) ;
dans lequel, lorsqu'une partie de la plate-forme de placement (41) dans la zone de stockage (216) est déplacée pour dépasser en saillie hors de la carrosserie du véhicule (21) dans la direction de déplacement (L), la structure de soutien (43) est tournée à l'opposé de la position de stockage par rapport à la plate-forme de placement (41), et une position de soutien (P3) est atteinte par la structure de soutien (43) par rapport à la plate-forme de placement (41), de sorte que la plate-forme de placement (41) soit soutenue par le structure de soutien (43),
dans lequel la partie de placement mobile (40) comprend une pluralité d'éléments de déplacement de plate-forme (454), qui peuvent être un rouleau et chacun de la pluralité des éléments de déplacement de plate-forme (454) est raccordé à une surface inférieure (S2) de la plate-forme de placement (41), lorsque la plate-forme de placement (41) est déplacée dans la direction de déplacement (L) d'avant en arrière dans la zone de stockage (216) ou hors de la carrosserie du véhicule (21), les éléments de déplacement de plate-forme (454) seraient déplacés avec la plate-forme de placement (41) de manière à déplacer ainsi la plate-forme de placement (41) sur une paroi inférieure (A4) de la zone de stockage (216),
dans lequel la position de stockage (P1 ou P2) comprend une première position de stockage (P1) et une seconde position de stockage (P2), la première position de stockage (P1) est obtenue en tournant la structure de soutien (43) pour qu'elle adhère sur une surface inférieure (S2) de la plate-forme de placement (41), et la deuxième position de stockage (P2) est obtenue en tournant la structure de soutien (43) pour être disposée verticalement sur une surface supérieure (S1) de la plate-forme de placement (41),
dans lequel la partie de placement mobile (40) comprend un élément de déplacement de soutien (46) fourni à la structure de soutien (43), et l'élément de déplacement de soutien (46) est utilisé pour déplacer la structure de soutien (43) dans la direction de déplacement (L) tandis que la structure de soutien (43) est dans la position de soutien (P3).

2. Bus touristique (2) selon la revendication 1, dans lequel la structure de soutien (43) est tournée de manière pivotante autour de l'élément pivotant (42) pour osciller par rapport à la plate-forme de placement (41) entre une surface supérieure (S1) et une surface inférieure (S2) de la plate-forme de placement (41).

3. Bus touristique (2) selon la revendication 1, dans lequel l'élément de déplacement de soutien (46) est collecté dans la zone de stockage (216) selon la position de stockage (P1 ou P2) de la structure de soutien (43).

4. Bus touristique (2) selon la revendication 1, dans lequel la partie de placement mobile (40) comprend une pluralité d'éléments de déplacement de plate-forme (46), et chacun de la pluralité d'éléments de déplacement de plate-forme (46) est raccordé à la surface inférieure (S2) de la plate-forme de placement (41).

5. Bus touristique (2) selon la revendication 1, dans lequel la carrosserie du véhicule (21) comprend une zone de siège (214) et un espace de conducteur (212), la zone de siège (214) est située au-dessus de la zone de stockage (216), l'espace conducteur (212) est raccordé spatialement à un côté de la zone de siège (214), et la porte avant (24) est disposée en correspondance avec l'espace conducteur (212).
